# EUROPÄISCHE PATENTSCHRIFT

(11) **EP 3 038 843 B1**
(45) Veröffentlichungstag und Bekanntmachung des Hinweises auf die Patenterteilung: **30.01.2019**
(21) Anmeldenummer: 14724039.4
(22) Anmeldetag: 02.05.2014
(51) Int. Cl.: B60C 9/28

(54) **FAHRZEUGLUFTREIFEN**
PNEUMATIC VEHICLE TYRE
PNEUMATIQUES POUR VÉHICULES

(30) Priorität: 15.07.2013 DE 102013107475
(43) Veröffentlichungstag der Anmeldung: 06.07.2016
(73) Patentinhaber: Continental Reifen Deutschland GmbH, 30165 Hannover (DE)
(72) Erfinder: HEYDEN, Arne, 51065 Köln (DE); JENKE, Roland, 30823 Garbsen (DE); HARING, Alois, 30962 Seelze (DE)
(74) Vertreter: Finger, Karsten
(86) Internationale Anmeldenummer: PCT/EP2014/058960
(87) Internationale Veröffentlichungsnummer: WO 2015/007411

(56) Entgegenhaltungen:
- DE-A1- 1 921 750
- GB-A- 2 015 941
- US-A- 3 896 869

## Beschreibung

Die Erfindung betrifft einen Fahrzeugluftreifen für Personenkraftwagen oder Leichtlastkraftwagen mit einer Karkasse radialer Bauart, mit einem radial außerhalb der Karkasse angeordneten Gürtel der in axialer Richtung A des Reifens gemessenen Gürtelbreite aus wenigstens zwei in radialer Richtung übereinander angeordneten Gürtellagen, welche jeweils aus in Gummi eingebetteten und innerhalb der Gürtellage parallelen Stahlkorden ausgebildet sind, wobei die Stahlkorde der einen Gürtellage zu den Stahlkorden der anderen Gürtellage in Kreuzanordnung ausgebildet ist, und mit einem radial außerhalb des Gürtels ausgebildeten, profilierten Laufstreifen.

Derartige Fahrzeugluftreifen sind bekannt. Bei Fahrzeugluftreifen für Personenkraftwagen (PKW) werden üblicher Weise die Gürtellagen mit Festigkeitsträgern aus Stahl zum Schutz gegen Eindringen von Fremdkörpern durch die Auslegung der Gürtellagen mit hoher Stahlkorddichte und mit besonders widerstandsfähigen, dicken Stahlkorden entgegengewirkt. Der besonders kritische Bereich für ein Eindringen von Fremdkörpern im Bereich des Laufstreifens eines Pkw-Reifens und auch eines Reifens für leichte Lastkraftwagen ist der zentrale Erstreckungsbereich des Reifenprofils, der zwischen den Reifenschultern, insbesondere in Äquatornähe ausgebildet ist. Zur weiteren Erhöhung der Durchschlagfestigkeit, beispielsweise für den Einsatz von Fahrzeugen auf für den Durchschlag kritischen Straßen wird üblicherweise die Stahlkorddichte und/oder die Dicke des Stahlkordmaterials der gesamten Gürtellagen weiter erhöht. Dabei wird über die gesamte Erstreckung des Gürtels des Reifens hierdurch zusätzliche Stahlkordmasse eingesetzt.

Die herkömmlichen Maßnahmen zur Erhöhung der Durchschlagfestigkeit die Gürtellagen mit höherer Stahlkorddichte und/oder dicker ausgebildetem Stahlkordmaterial auszubilden gehen somit mit relativ hohem Materialaufwand für den gesamte Ausbildung des Gürtels einher, um den besonders kritischen Bereich im Bereich der Äquatomähe zu verstärken.

Die Ausbildung des gesamten Gürtels über seine gesamte Erstreckung mit mehr Stahlmaterial hat negativen Einfluss auf den Rollwiderstand und auf Fahreigenschaften des Fahrzeugs. Um diesen Nachteilen entgegenzuwirken, wird üblicherweise versucht mit zusätzlichen Maßnahmen, insbesondere durch spezielle Profilgestaltung die Nachteile wieder auszugleichen. Dies schränkt jedoch die konstruktiven Möglichkeiten der Profilgestaltung hinsichtlich der Beeinflussung anderer Fahreigenschaften ein.

Aus der US 3,896,869 A ist ein Fahrzeugluftreifen gemäß den Merkmalen des Oberbegriffs von Anspruch 1 bekannt.

Der Erfindung liegt die Aufgabe zugrunde, bei derartigen Fahrzeugreifen in einfacher Weise eine erhöhte Durchschlagfestigkeit bei geringem Materialverbrauch unter Schaffung größerer Freiräume für die Profilgestaltung zu ermöglichen.

Die Aufgabe wird erfindungsgemäß durch die Ausbildung eines Fahrzeugluftreifens für Personenkraftwagen oder Leichtlastkraftwagen mit einer Karkasse radialer Bauart, mit einem radial außerhalb der Karkasse angeordneten Gürtel der in axialer Richtung A des Reifens gemessenen Gürtelbreite aus wenigstens zwei in radialer Richtung übereinander angeordneten Gürtellagen, welche jeweils aus in Gummi eingebetteten und innerhalb der Gürtellage parallelen Stahlkorden ausgebildet sind, wobei die Stahlkorde der einen Gürtellage zu den Stahlkorden der anderen Gürtellage in Kreuzanordnung ausgebildet ist, und mit einem radial außerhalb des Gürtels ausgebildeten, profilierten Laufstreifen, gemäß den Merkmalen von Anspruch 1 gelöst, bei dem in einer radialen Position zwischen der Karkasse und der radial inneren Gürtellage des Gürtels ein über den Umfang des Reifens erstreckter Streifen der in axialer Richtung A gemessenen Breite c mit 15mm ≤ c ≤(0,5B) von in Gummi eingebetteten Festigkeitsträgern textiler Bauart angeordnet ist, welche - insbesondere parallel zueinander - mit einem Neigungswinkel α **mit α** = **90°** zur Umfangsrichtung ausgerichtet sind, wobei der Streifen mit mindestens einem axialem Abstand aₘᵢₙ mit aₘᵢₙ = (0,2 B) zu beiden axialen Gürtelrändern angeordnet und die Äquatorebene des Reifens schneidet.

Durch diese Ausbildung wird ermöglicht, dass der Fahrzeugluftreifen - wie bei Pkw und leichten Lastkraftwagen gewünscht - mit herkömmlichen Stahlgürteln mit ein oder zwei Lagenanordnungen ausgebildet werden können unter Nutzung einer herkömmlichen radialen Karkasse. Der zusätzliche Streifen mit textilen Festigkeitsträgern, welche sich mit Schrägverlauf zur Umfangsrichtung im Streifen erstrecken, verstärken unterhalb des Gürtels die Durchschlagfestigkeit des Reifens genau in dem für einen Durchschlag bei diesen Reifen kritischen Bereich in dem zur Äquatorebene ausgebildeten Umgebungs-Erstreckungsbereich herum. Durch die gezielte Begrenzung der Verstärkung auf diesen kritischen Erstreckungsabschnitt unter Nutzung textiler Festigkeitsträger kann der Materialaufwand zur Erzielung der erhöhten Durchschlagfestigkeit minimiert werden. Dabei wird durch diese Anordnung mit dem Streifen mit textilen, schräg verlaufenden Festigkeitsträgern die Karkasse und die Dehnung des Reifens kaum beeinflusst, wodurch trotz erhöhter Durchschlagfestigkeit die Abrieb-, Brems,- und Aquaplaning-Eigenschaften kaum beeinflusst werden. Ausgleichende Maßnahmen durch hierzu gezielte, ausgleichende Profilauslegung können entfallen. Zur Profilgestaltung stehen mehr Freiräume zur Verfügung. So können selbstverständlich auch die bekannten Maßnahmen zur Erhöhung der Aquaplaning-, Brems-, Abrieb-, oder Rollwiderstands-Eigenschaften weiterhin umgesetzt werden, wobei sie nicht zunächst die durch die Maßnahmen zur Erzielung höherer Durchschlagsfestigkeit bedingten Reduzierungen ausgleichen herangezogen werden, sondern in großem Umfang unmittelbar zur effektiven Verbesserung der jeweiligen Eigenschaft des Reifens eingesetzt werden können. **Die Ausbildung mit α = 90° ermöglicht dabei eine Optimierung der Verstärkung der Karkasse zur Erhöhung der Durchschlagfestigkeit der Karkasse.**

Darüber hinaus kann auch bei großen Reifenserien, bei denen kurzfristig für einen Teil der Produkte der Reifenserie erhöhte Durchschlagsfestigkeit gewünscht wird, in einfacher Weise die Durchschlagsfestigkeit durch Ausbildung dieser speziellen, durchschlagsfesten Produkte lediglich durch Integration des zusätzlichen Streifens hergestellt werden ohne weitreichende Konstruktionsänderung von Profil, Karkasse oder Gürtel.

Besonders vorteilhaft ist die Ausbildung eines Fahrzeugluftreifens gemäß den Merkmalen von Anspruch 2, wobei die Breite c mit 20mm≤c≤ (0,4B) ausgebildet ist. Hierdurch kann in einfacher Weise bei üblichen Rippenbreiten der besonders kritische axiale Erstreckungsbereich von einer bis zwei benachbarten Profilrippenbreiten besonders wirkungsvoll gegen Durchschlag geschützt werden ohne nennenswerte negative Auswikungen auf andere Performance-Eigenschaften des Reifens. Hierdurch kann darüber hinaus zusätzlich positiver Einfluss auf "cornering stiffness"-Eigenschaft ohne negativen Einfluss auf Rollwiderstand, Bremseigenschaft und Abriebbild ausgeübt werden.

Besonders vorteilhaft ist die Ausbildung eines Fahrzeugluftreifens gemäß den Merkmalen von Anspruch 3, wobei der Streifen zumindest zu einem Gürtelrand - insbesondere zu beiden Gürtelrändern - mit einem axialem Abstand a mit 25mm≤a≤0,5(B - 25mm) angeordnet ist. Hierdurch kann in einfacher Weise der besonders kritische Zentrumsbereich des Gürtels hinsichtlich der Durchschlagsfestigkeit verbessert werden, wobei negative Wechselwirkungen mit haltbarkeitsrelevanten Bauteilen im Reifenschulterbereich wirkungsvoll vermieden werden können.

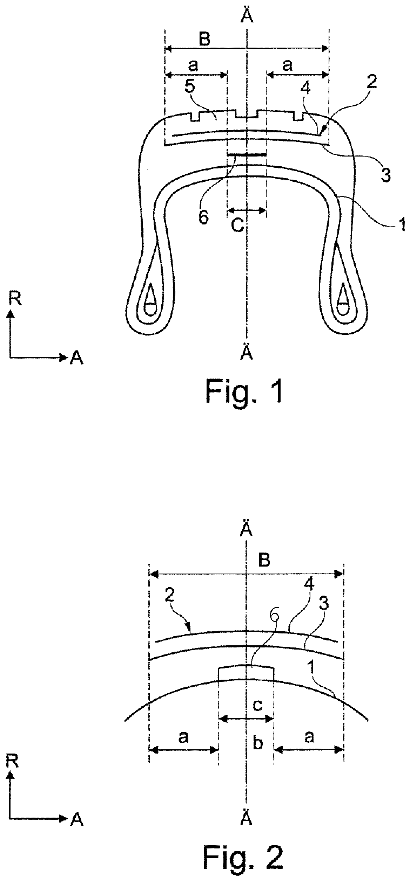

Besonders vorteilhaft ist die Ausbildung eines Fahrzeugluftreifens gemäß den Merkmalen von Anspruch 4, wobei in einer radialen Position zwischen dem Streifen und der radial inneren Gürtellage des Gürtels ein zweiter über den Umfang des Reifens erstreckter Streifen der in axialer Richtung A gemessenen Breite c und von in Gummi eingebetteten Festigkeitsträgern textiler Bauart angeordnet ist, welche - insbesondere parallel zueinander - mit einem Neigungswinkel α von 20°≤α≤<90° zur Umfangsrichtung und - insbesondere in Kreuzanordnung zu den Festigkeitsträgern des ersten Streifens geneigt - ausgerichtet sind, wobei der zweite Streifen ebenfalls mit mindestens einem axialem Abstand aₘᵢₙ mit aₘᵢₙ = (0,3 B) zu beiden Gürtelkanten angeordnet ist und die Äquatorebene des Reifens schneidet. Hierdurch kann die Durchschlagssicherung zusätzlich weiter erhöht werden.
Besonders vorteilhaft ist die Ausbildung eines Fahrzeugluftreifens gemäß den Merkmalen von Anspruch 5, wobei die beiden Streifen über den gleichen axialen Erstreckungsbereich des Reifens erstreckt angeordnet sind. Durch diese Ausbildung kann der Schutzeffekt optimal ausgebildet werden.
Die Erfindung wird im Folgenden an Hand der in den Fig.1 bis Fig.5 dargestellten Ausführungsbeispiele eines Personenkraftwagens radialer Bauart erläutert, wobei es sich bei den Figuren 3 und 5 um nicht erfindungsgemäße Ausführungsformen handelt. Darin zeigen
Fig. 1 einen Teilquerschnitt durch einen Fahrzeugluftreifen,
Fig. 2 die Gürtellagen des Fahrzeugluftreifens von Fig.1 in Querschnittdarstellung,

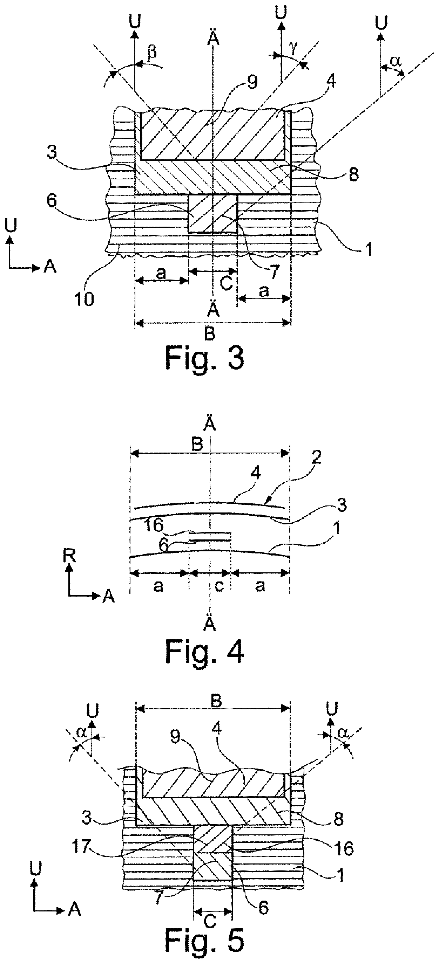

Fig. 3 eine Draufsicht auf die Gürtellagen von Fig. 2,
Fig. 4 eine Darstellung einer alternativen Ausführung der Gürtellagen des Fahrzeugluftreifens in Querschnittdarstellung und
Fig. 5 eine Draufsicht auf die Gürtellagen von Fig.5.
Die Figuren 1 bis 3 zeigen einen Fahrzeugluftreifen für Personenkraftwagen (Pkw) bekannter Art mit einer Karkasse 1 radialer Bauart, welche sich in Umfangsrichtung U des Fahrzeugluftreifens über den gesamten Umfang des Fahrzeugluftreifens erstreckt und ausgehend von dem zur Befestigung des Reifens auf einer Felge ausgebildeten Reifenwulst in der linken Reifenseitenwand des Reifens in radialer Richtung nach außen hin bis zur linken Reifenschulter hin erstreckt, von dort in axialer Richtung A des Reifens bis zur rechten Reifenschulter erstreckt und in radialer Verlängerung entlang der in Figur 1 dargestellten rechten Reifenseitenwand bis zu dem zur Befestigung des Reifens auf der Felge am radial inneren Erstreckungsende der rechten Reifenseitenwand ausgebildeten Reifenwulst erstreckt. Die Karkasse 1 ist in bekannter Weise um den jeweiligen Reifenwulstkern umgeschlagen. Die Karkasse 1 ist in bekannter Weise mit parallelen in Gummimaterial der Karkasslage ausgebildeten Festigkeitsträgern 10 ausgebildet, welche sich im Bereich einer Reifenseitenwand jeweils im Wesentlichen in radialer Richtung und - wie in Fig. 3 zu erkennen ist - in ihrem axialen Erstreckungsbereich von Reifenseitenwand zu Reifenseitenwand im Wesentlichen in axialer Richtung erstrecken.

Radial außerhalb der Karkasse 1 ist ein Gürtel 2 bekannter Art ausgebildet, welcher sich in Umfangsrichtung U des Fahrzeugluftreifens über den gesamten Umfang des Fahrzeugluftreifens erstreckt und in axialer Richtung A des Fahrzeugluftreifens ausgehend von der linken Reifenschulter bis zur rechten Reifenschulter über eine in axialer Richtung A gemessene Gürtelbreite B erstreckt. Der Gürtel 2 ist aus zwei in radialer Richtung R des Fahrzeugluftreifens übereinander angeordneten Gürtellagen 3 und 4 bekannter Art ausgebildet. Die Gürtellage 3 ist mit parallel zueinander ausgerichteten, in das Gummimaterial eingebetteten und in Umfangsrichtung U hintereinander angeordneten Stahlcorden 8 ausgebildet, welche sich über den gesamten axialen Erstreckungsbereich der Gürtellage 3 unter einem Neigungswinkel ß zur Umfangsrichtung U ausgerichtet erstrecken. Die Gürtellage 4 ist mit parallel zueinander ausgerichteten, in Gummimaterial eingebetteten und in Umfangsrichtung U hintereinander angeordneten Stahlkorde 9 ausgebildet, welche sich über den gesamten axialen Erstreckungsabschnitt der Gürtellage 4 erstrecken und mit einem Neigungswinkel γ zur Umfangsrichtung U ausgerichtet sind.

In den Figuren 1 bis 3 ist die Äquatorebene Ä-Ä des Fahrzeugluftreifens eingezeichnet, welche die axiale Position des Reifens mit dem größten Durchmesser der Reifenmantelfläche des auf eine Normmessfelge - gemäß E.T.R.T.O.-Standard im Normzustand (und Norminnendruck) - montierten Reifen im unbelasteten Zustand angibt. Der Winkel ß und der Winkel γ sind in der Äquatorebene mit 20° ≤ ß ≤ 40° und mit 20° ≤ γ ≤ 40° gewählt ausgebildet. Beispielsweise ist ß = 27° und γ = 27°.
Die Stahlkorde 8 und die Stahlkorde 9 sind längs ihrer Erstreckung in Umfangsrichtung U gesehen in zueinander entgegengesetzter axialer Richtung A geneigt ausgebildet. Hierdurch ist ein Kreuzverband der beiden Gürtellagen 3 und 4 gebildet. Im dargestellten Ausführungsbeispiel ist der Wert von ß gleich dem Wert von γ gewählt.
Die radial innere Gürtellage 3 ist mit der Gesamtgürtelbreite B ausgebildet. Die radial äußere der beiden Gürtellagen 4 ist maximal mit der Gürtellage B ausgebildet, kann aber bis zu 10% schmaler als die Gürtellage 3 ausgebildet sein.
Radial oberhalb des Gürtels 2 ist in bekannter Weise ein profilierter Laufstreifen 5 ausgebildet, welcher sich ausgehend von der linken Reifenschulter bis zur rechten Reifenschulter über den gesamten Erstreckungsbereich des Gürtels 2 erstreckt. Der Laufstreifen 5 ist an seiner radial äußeren Oberfläche mit dem Laufstreifenprofil versehen. Der Laufstreifen 5 bildet mit seiner radial äußeren Oberfläche die Straßenkontaktoberfläche des Reifens.
Zwischen der radial inneren, ersten Gürtellage 3 und der Karkasse 1 ist ein in Umfangsrichtung U über den gesamten Umfang des Fahrzeugluftreifens erstreckter und in axialer Richtung A über eine Breite c erstreckter Streifen 6 ausgebildet. Der Streifen 6 ist aus einer Lage von in Umfangsrichtung U des Fahrzeugluftreifens hintereinander angeordneten und parallel zueinander ausgerichteten textilen Festigkeitsträgern 7 ausgebildet, welche sich in axialer Richtung A des Fahrzeugluftreifens über die gesamte Erstreckungsbreite c des Streifens 6 erstreckt unter Einschluss eines Neigungswinkels *α* zur Umfangsrichtung U ausgerichtet sind.

Im dargestellten Ausführungsbeispiel ist α = 45° gewählt. Eine derartige nicht erfindungsgemäße Ausbildung kann beispielsweise zur zusätzlichen Verstärkung der Karkasse durch Entlastung des Gürtels sinnvoll sein. Die Festigkeitsträger des Streifens 6 ermöglichen hierdurch eine Sperrwirkung zur Radialkarkasse.

Im erfindungsgemäßen - nicht dargestellten - Ausführungsbeispiel ist α = 90° gewählt. Eine derartige Ausbildung ist beispielsweise zur zusätzlichen Schutzwirkung der Karkasse durch Erhöhung der Reißfestigkeit der Karkasse sinnvoll . Der Streifen 6 ist axial dabei derart zwischen Gürtel 2 und Karkasse 1 positioniert, dass er zu beiden den Gürtel 3 in axialer Richtung A begrenzenden Gürtelkanten jeweils mit einem in axialer Richtung A gemessenen Abstand a angeordnet ist, wobei sich Äquatorebene Ä - Ä des Reifens durch den Streifen 6 hindurch erstreckt und diesen schneidet.
Die Breite c des Streifens ist mit 15mm ≤ c ≤ (0,5 B) ausgebildet. In besonderer Ausführung ist die Breite c des Streifens zusätzlich mit (0,2 B) ≤ c ausgebildet.
Die Breite c wird besonders sinnvoller Weise mit 20mm ≤ c ≤ (0,4 B) ausgebildet. Im dargestellten Ausführungsbeispiel ist c = (0,25 B) ausgebildet.
Der Abstand a ist dabei mindestens mit aₘᵢₙ = (0,2B) ausgebildet.
Der Abstand a ist in besonders sinnvoller Weise mit 25mm ≤ a ≤ 0,5(B - 25mm) ausgebildet.

Im dargestellten Ausführungsbeispiel ist an beiden Seiten des Streifens 6 jeweils der Abstand a zur nächstgelegenen Gürtelkanten des Gürtels 2 hin jeweils gleich groß gewählt.

In einem nicht dargestellten Ausführungsbeispiel ist der Abstand des Streifens 6 zur linken Gürtelkante etwas größer gewählt als der Abstand des Streifens 6 zur rechten Gürtelkante.

Die textilen Festigkeitsträger 7 des Streifens 6 sind aus dem Reifenbau bekannte Festigkeitsträger textiler Bauart, beispielsweise Korde aus Nylon, Rayon oder Polyester.

Die Festigkeitsträger 10 der Karkasse 1 sind übliche zur Herstellung von Karkassen radialer Bauart bekannte Festigkeitsträger, beispielsweise Korde aus Polyester oder Rayon.

Die Figuren 4 und 5 zeigen ein alternatives Ausführungsbeispiel zu dem in den Figuren 1 bis 3 dargestellten Reifen. In diesem Ausführungsbeispiel ist lediglich zwischen dem Streifen 6 und der radial inneren Gürtellage 3 des Gürtels 2 ein zusätzlicher im Wesentlichen zum Streifen 6 baugleicher Streifen 16 angeordnet ausgebildet. Der Streifen 16 erstreckt sich ebenfalls über den gesamten Umfang des Fahrzeugluftreifens in Umfangsrichtung U und ist mit der gleichen in axialer Richtung A gemessenen Breite c wie der Streifen 6 ausgebildet. Der Streifen 16 ist in axialer Richtung deckungsgleich zum Streifen 6 mit Abstand a zu den beiden Gürtelkanten positioniert angeordnet. Die Festigkeitsträger 17 textiler Bauart des Streifens 16 erstrecken sich ebenfalls unter Einschluss eines Neigungswinkels α zur Umfangsrichtung U des Fahrzeugluftreifens, sind jedoch längs der Erstreckung in Umfangsrichtung U in entgegen gesetzter axialer Richtung A geneigt ausgerichtet wie die Festigkeitsträger 7 des Streifens 6. Die beiden Streifen 16 und 6 bilden somit einen Kreuzverband.

Das Ausführungsbeispiel zeigt einen Fahrzeugluftreifen für Personenkraftwagen. Die Ausbildung mit Gürtel 2, Streifen 6 und Karkasse 1 ist ebenso bei einem Fahrzeugluftreifen für einen Leichtlastkraftwagen einsetzbar. Unter Leichtlastkraftwagen werden in diesem Sinne verstanden Kraftfahrzeuge verstanden, deren Reifen im unbelasteten, montierten Zustand am Fahrzeug einen Normdruck p mit 2,0bar≤p≤6,75bar aufweisen.

### Bezugszeichenliste

- 1: Karkasse
- 2: Gürtel
- 3: Gürtellage
- 4: Gürtellage
- 5: Laufstreifen
- 6: Streifen
- 7: Textiler Festigkeitsträger
- 8: Stahlkord
- 9: Stahlkord
- 10: Festigkeitsträger
- 16: Streifen
- 17: Textiler Festigkeitsträger

## Patentansprüche

1. Fahrzeugluftreifen für Personenkraftwagen oder Leichtlastkraftwagen mit einer Karkasse (1) radialer Bauart, mit einem radial außerhalb der Karkasse (1) angeordneten Gürtel (2) der in axialer Richtung A des Reifens gemessenen Gürtelbreite B aus wenigstens zwei in radialer Richtung R übereinander angeordneten Gürtellagen (3,4), welche jeweils aus in Gummi eingebetteten und innerhalb der Gürtellage (3,4) parallelen Stahlkorden (8,9) ausgebildet sind, wobei die Stahlkorde (8) der einen Gürtellage (3) zu den Stahlkorden (9) der anderen Gürtellage (4) in Kreuzanordnung ausgebildet ist, und mit einem radial außerhalb des Gürtels (2) ausgebildeten, profilierten Laufstreifen (5), wobei in einer radialen Position zwischen der Karkasse (1) und der radial inneren Gürtellage (3) des Gürtels (2) ein über den Umfang des Reifens erstreckter Streifen (6) der in axialer Richtung A gemessenen Breite c mit 15mm ≤ c ≤(0,5B) von in Gummi eingebetteten Festigkeitsträgern (7) textiler Bauart angeordnet ist, welche - insbesondere parallel zueinander - mit einem Neigungswinkel α zur Umfangsrichtung U ausgerichtet sind, wobei der Streifen (6) mit mindestens einem axialem Abstand aₘᵢₙ mit aₘᵢₙ = (0,2 B) zu beiden axialen Gürtelrändern angeordnet und die Äquatorebene Ä-Ä des Reifens schneidet,
**dadurch gekennzeichnet,**
**dass** die Festigkeitsträger mit einem Neigungswinkel α mit α = 90° zur Umfangsrichtung U ausgerichtet sind.

2. Fahrzeugluftreifen gemäß den Merkmalen von Anspruch 1,
wobei die Breite c mit 20mm≤c≤(0,4B) ausgebildet ist.

3. Fahrzeugluftreifen gemäß den Merkmalen von Anspruch loder 2,
wobei der Streifen (6) zumindest zu einem Gürtelrand - insbesondere zu beiden Gürtelrändern - mit einem axialem Abstand a mit 25mm≤a≤0,5(B - 25mm) angeordnet ist.

4. Fahrzeugluftreifen gemäß den Merkmalen von einem der vorangegangenen Ansprüche,
wobei in einer radialen Position zwischen dem Streifen (6) und der radial inneren Gürtellage (3) des Gürtels (2) ein zweiter über den Umfang des Reifens erstreckter Streifen (16) der in axialer Richtung A gemessenen Breite c und von in Gummi eingebetteten Festigkeitsträgern (17) textiler Bauart angeordnet ist, welche - insbesondere parallel zueinander - mit einem Neigungswinkel α von 20°≤a≤90° zur Umfangsrichtung U und - insbesondere in Kreuzanordnung zu den Festigkeitsträgern (7) des ersten Streifens (6) geneigt - ausgerichtet sind, wobei der zweite Streifen (16) ebenfalls mit mindestens einem axialem Abstand aₘᵢₙ mit aₘᵢₙ = (0,3 B) zu beiden Gürtelkanten angeordnet ist und die Äquatorebene Ä-Ä des Reifens schneidet.

5. Fahrzeugluftreifen gemäß den Merkmalen von Anspruch 4,
wobei die beiden Streifen (6,16) über den gleichen axialen Erstreckungsbereich des Reifens erstreckt angeordnet sind.

## Claims

1. Pneumatic vehicle tyre for passenger cars or light-duty trucks with a carcass (1) of a radial type of construction, with a breaker belt (2) arranged radially outside the carcass (1) and having a belt width B, measured in the axial direction A of the tyre, comprising at least two belt plies (3, 4) which are arranged one above the other in the radial direction R and are in each case formed by steel cords (8, 9) embedded in rubber and parallel within the belt ply (3, 4), the steel cords (8) of one belt ply (3) being formed in a criss-crossing arrangement in relation to the steel cords (9) of the other belt ply (4), and with a profiled tread (5), formed radially outside the breaker belt (2), wherein, in a radial position between the carcass (1) and the radially inner belt ply (3) of the breaker belt (2), there is arranged so as to extend over the circumference of the tyre a strip (6) of the width c, measured in the axial direction A, where 15 mm ≤ c ≤ (0.5 B), comprising reinforcing elements (7) of a textile type of construction embedded in rubber, which are aligned - in particular parallel to one another - with an angle of inclination α in relation to the circumferential direction U, wherein the strip (6) is arranged in relation to both axial edges of the belt with at least an axial distance aₘᵢₙ, where aₘᵢₙ = (0.2 B), and intersects the equatorial plane Ä-Ä of the tyre,
**characterized**
**in that** the reinforcing elements are aligned with an angle of inclination α in relation to the circumferential direction U where α = 90°.

2. Pneumatic vehicle tyre according to the features of Claim 1,
wherein the width c is formed where 20 mm ≤ c ≤ (0.4 B) .

3. Pneumatic vehicle tyre according to the features of Claim 1 or 2,
wherein the strip (6) is arranged at least in relation to one edge of the belt - in particular in relation to both edges of the belt - with an axial distance a, where 25 mm ≤ a ≤ 0.5 (B - 25 mm) .

4. Pneumatic vehicle tyre according to the features of one of the preceding claims,
wherein, in a radial position between the strip (6) and the radially inner belt ply (3) of the breaker belt (2), there is arranged so as to extend over the circumference of the tyre a second strip (16) of the width c, measured in the axial direction A and comprising reinforcing elements (17) of a textile type of construction embedded in rubber, which are aligned - in particular parallel to one another - inclined with an angle of inclination α of 20° ≤ α ≤ 90° in relation to the circumferential direction U and in particular in a criss-crossing arrangement in relation to the reinforcing elements (7) of the first strip (6), wherein the second strip (16) is likewise arranged in relation to both edges of the belt with at least an axial distance aₘᵢₙ, where aₘᵢₙ = (0.3 B), and intersects the equatorial plane Ä-Ä of the tyre.

5. Pneumatic vehicle tyre according to the features of Claim 4,
wherein the two strips (6, 16) are arranged so as to extend over the same axial region of extent of the tyre.

## Revendications

1. Bandage pneumatique pour roue de voiture automobile ou de camionnette, présentant
une carcasse (1) à structure radiale,
une ceinture (2) disposée radialement à l'extérieur de la carcasse (1), dont la largeur B mesurée dans la direction axiale A du bandage de roue est formée d'au moins deux couches de ceinture (3, 4) disposées l'une au-dessus de l'autre dans la direction radiale R, chacune en câbles d'acier (8, 9) parallèles incorporés dans du caoutchouc et dans la couche de ceinture (3, 4), les câbles d'acier (8) d'une couche de ceinture (3) étant disposés en agencement croisé par rapport aux câbles d'acier (9) de l'autre couche de ceinture (4), et
une bande de roulement profilée (5) formée radialement à l'extérieur de la ceinture (2),
une bande (6), dont la largeur c mesurée dans la direction axiale A satisfait les relations 15 mm ≤ c ≤(0,5B), formée de renforts (7) de nature textile incorporés dans du caoutchouc, s'étendant autour de la périphérie du bandage de roue, étant disposée en une position radiale entre la carcasse (1) et la couche de ceinture (3) radialement intérieure de la ceinture (2),
les renforts étant alignés en particulier parallèlement les uns aux autres à un angle d'inclinaison α par rapport à la direction périphérique U,
la bande (6) étant disposée à une distance axiale aₘᵢₙ, aₘᵢₙ = au moins (0,2B), des deux bords axiaux de la ceinture et coupant le plan équatorial Ä-Ä du bandage de roue,
**caractérisé en ce que**
les renforts sont orientés sous un angle d'inclinaison α par rapport à la direction périphérique U, α = 90°.

2. Bandage pneumatique pour roue de véhicule selon les caractéristiques de la revendication 1, dans lequel la largeur c vérifie les relations 20 mm≤c≤(0,4B).

3. Bandage pneumatique pour roue de véhicule selon les caractéristiques des revendications 1 ou 2, dans lequel la bande (6) est disposée à une distance axiale A, 25 mm≤a≤0,5(B-25 mm), d'au moins un bord de la ceinture et en particulier des deux bords de la ceinture.

4. Bandage pneumatique pour roue de véhicule selon les caractéristiques de l'une des revendications précédentes, dans lequel dans une position radiale située entre la bande (6) et la couche radialement intérieure (3) de la ceinture (2) est disposée une autre bande (16) s'étendant à la périphérie du bandage de roue, dont la largeur mesurée dans la direction axiale A est c et formée de renforts (17) textiles incorporés dans le caoutchouc, orientés en particulier parallèlement les uns aux autres et à un angle d'inclinaison α, 20°≤α≤90° par rapport à la direction périphérique U et en particulier disposés en agencement croisé par rapport aux renforts (7) de la première bande (6), la deuxième bande (16) étant également disposée à une distance axiale aₘᵢₙ, aₘᵢₙ = (0,3B) par rapport aux deux bords de la ceinture et coupant le plan équatorial Ä-Ä du bandage de roue.

5. Bandage pneumatique pour roue de véhicule selon les caractéristiques de la revendication 4, dans lequel les deux bandes (6, 16) s'étendent sur une même partie de l'extension axiale du bandage de roue.
